# EUROPEAN PATENT SPECIFICATION

(11) **EP 1 952 737 B1**
(45) Date of publication and mention of the grant of the patent: **16.09.2009**
(21) Application number: 08001095.2
(22) Date of filing: 22.01.2008
(51) Int. Cl.: A47J 37/06, H05B 3/00

(54) **Tool and method for heating and keeping it warm a precooked meat product by means of electric energy**
Werkzeug und Verfahren zum Erwärmen und Warmhalten eines Fertigfleischproduktes mittels elektrischer Energie
Outil et procédé pour chauffer et conserver au chaud un produit précuit à base de viande au moyen d'énergie électrique

(30) Priority: 30.01.2007 IT MI20070144
(43) Date of publication of application: 06.08.2008
(73) Proprietor: Tipica Salumeria Tullio Masè s.r.l., 34018 San Dorligo della Valle (TS) (IT)
(72) Inventor: Rovere, Pierpaolo, 33017 Tarcento (UD) (IT); Castellarin, Elena Elisa, 33100 Udine (IT)
(74) Representative: Ferraiolo, Ruggero

(56) References cited:
- WO-A-02/102215
- DE-A1- 3 720 042
- US-A- 3 632 962
- US-A- 3 943 332
- US-A- 4 412 610
- US-A- 6 034 359

## Description

The invention refers to a tool and a method aimed to heat and keep it warm a precooked meat product by means of electric energy, in particular, their scope being of bringing to and keeping at a temperature adapted to an improvised fruition of a precooked meat food product as for instance a precooked ham, a roast suckling-pig, a piece of roasted meat or a piece composed by portions or slices of cooked ham or other precooked meats piled up and compacted one on the other along a spit or on a base, presented to consumers and ready for hand slicing and eating with bread and other seasoning products.

To make simple the following description, any precooked meat food product adapted to be used in the tool and by the method according to the invention will be referred to as "product".

The precooked meat products as those cited here above as examples are adapted to be processed in the invented tool and by the invented method which are contrived for satisfying at the best the custom to eat such products in an improvised way, that is on the same place where the product is presented to the public, which custom is deep-rooted in may specific regions and is expanding everywhere as the custom to use the so called "street food", namely walking food. The products for such type of fruition are conventionally cooked at least at a temperature of 70°C.

Conventionally, said products, so cooked and then given back to ambient temperature, are moved to a near presentation place in order to be introduced into a suitable tool and brought and maintained at the fruition temperature or may be stored in a first refrigerated ambient, generally between 0°C and 4°C, waiting for going forward to a programmed course. The programmed course may be the one described here above that comprises introduction of the product in the tool, near the cooking place, for immediately offering it to consumers or the other course to transfer the product in a refrigerated means into a second refrigerated ambient, waiting for offering it to consumers at the desired temperature which is variable between 60°C and 80°C generally. Such a temperature makes the aroma of the product be fully appreciated and also the growth of dangerous bacteria inside the product be prevented.

The prior art teaches a number of ways for solving the problem of keeping warm and ready for fruition a precooked meat product. Certain producers keep steamed the product clamped into a tool, but the main drawbacks of such a solution reside in the difficulty of keeping the concerned ambient temperature constant, particularly when the ambient is at the open air, and of generating an ambient having humidity not adapted to the product. Other producers maintain the product in a room at controlled temperature, which causes difficulties in slicing the product and keeping clean the room. Still other producers resort to a heating by infra-red rays which, nevertheless, makes dry the product surface.

Document US-A- 4 412 610 is known that discloses a cooking and broiling apparatus and a method for preparing meats by passage of electric current through the meat product. The apparatus is a conveying mechanism which transports a meat product from a broling position to a cooking position between a couple of opposite electrodes formed by a plurality of electrode fingers made of carbon for assuring good current passage to the meat, these electrodes being movable between rods that support the meat product.

The invented tool and method obviate all the cited drawbacks and are adapted to keep the product warm and to slice it without difficulties.

The tool comprises means for supporting the product on a work table and means for clamping a one-piece product or comprises an upper element supporting a vertically hung spit, along which parts or slices of cooked ham or other precooked meat are piled up and compacted one on the other. The means for holding the product is equal or similar with the conventional vice as used for clamping a cooked ham or a roast suckling-pig or a piece of roasted meat, otherwise said means may be other mechanically equivalent means as well as the vertically hung spit may be similar with the one used for the different kinds of "Kebab". The tool comprises at least two electrodes in the form of small spits adapted to penetrate into two sensibly opposite parts of the product and fed by a source of alternate electric current of such tension and frequency that an electric potential difference between said two parts causes a homic heating of the whole product body, the electric current which passes through said body being low enough to not cause damage and uneasiness for the operator; control means comprising at least a temperature sensor for sensing the product inner temperature and a switch associated with the temperature sensor adapted to stop the current passage as the product inner temperature passes the desired value and to reinstate the current passage in order to bring the product again to the desired inner temperature. The alternate electric current has a frequency of at least 50 Hz, but preferably well higher to said value, since the current frequency shall be higher than 15 KHz generally if it is desired to avoid the troublesome hum and the corrosion or dissolving of the electrodes, which causes passage of electrode material into the product. The selection of the electrode material affects the frequency to be used in the electric system. For instance, if stainless steel electrodes are used and it is desired to avoid their rapid corrosion or solution, frequencies comprised between 40 and 50 KHz shall be used, whilst use of titanium electrodes will allow use of frequencies well lower that those referred to above, depending on the desired electrodes endurance times.

The electrodes are in the form of small spits so as to make them penetrate into the product enough for passing over possible fat panels, which are not good conductors, otherwise the electrodes are in the form of two or more small spits projecting from one of the two walls of a substantially flat plate.

The specifications of the electric current source providing for the desired and safe technical results are the following: power not over 300 Watt; tension between 12 and 25 Volts; frequency higher than 15 KHz.

Although the above specifications are such that the current passing through the product is not sensed through a human contact, optionally, the tool parts which are under tension are electrically insulated in case the current which passes through the tool and the product may cause troubles for those persons who should touch said parts.

The invented method comprises the steps of holding the product fast in the tool; introducing at least one temperature sensor into the product core; applying at least two electrodes in the form of small spits each in a product part substantially opposite to the other part; applying to each electrode an alternate current of power and tension adapted to reach and maintain the desired temperature in the product, the current frequency being such as to save hum during the tool work, electrode corrosion o dilution; cutting the product in slices a first time on consumer's request; cutting the product in slices further times until the operator decide to change the position of the product in the tool or the position of the electrodes in the product in order to proceed in the cutting; checking the temperature sensed by the temperature sensor so as to switch off the electric current as the desired temperature is exceeded and reinstate the current passage as it is necessary in order to reach the desired temperature in the product.

The above steps may be preceded by injecting or spreading a pickle into the product body, which provides for the double scope of improving the product taste and the current passage through the product.

The minimum temperature given the product as presented to the consumers shall be that prescribed possibly by the health authorities in each country.

The electic characteristics of the starting phase in the system comprising an electric current source and the electrodes depend on the characteristics of each product under treatment and on the temperature one wishes to maintain in the product, keeping in mind that the control means will be working autonomously depending on the variation of the current effect, which in turn depends on the reduction of the product weight and on its medium conductivity which changes as the product is cut in slices. In particular, the number of electrodes, the way and the position of the connection with the tool and the position by which they are applied to the product are defined on the basis of the weight, dimensions, shape and ratio between product lean and fat parts. Surely, the operating instructions for the tool and use of the method suggest to place the opposite electrodes at the lesser possible reciprocal distance so that the electric tension as required for heating the product is the less possible. The electrodes are pointed elements, generally made of metal, like small spits, so that their tips, introduced in the chosen points, may reach the lean parts and avoid the possible superficial fat parts that are not so conductive. The electrodes are fixed or mobile on so called vices of the tool or are each fixed at the end of a flying conductor, so that the operator may change the application point of the electrodes depending on the position that the product has in the tool, on the heating progress and on the proceeding reduction of the product mass and shape which follow the cutting in slices.

The main advantage of the invented tool and method resides in that the temperature in the product is steady and homogeneous even if the product is in the open air and in that the passage of the weak current through the product does not affect its organoleptic characteristics and does not implies risks of decay, the time period the product remains in the tool being short. Also, it is realized that an operator does not run into danger when handling the tool because of the low tension applied in the system and the low current passing through the product.

The invention will be described in detail by way of an example of tool embodiment accompanied by diagrammatic drawings in which:
- Fig. 1 is a partly cross-sectioned top view,
- Fig. 2 is a first side view,
- Fig. 3 is a part perspective view,
- Fig. 4 is a second side view,
- Fig. 5 is a perspective view of a detail.

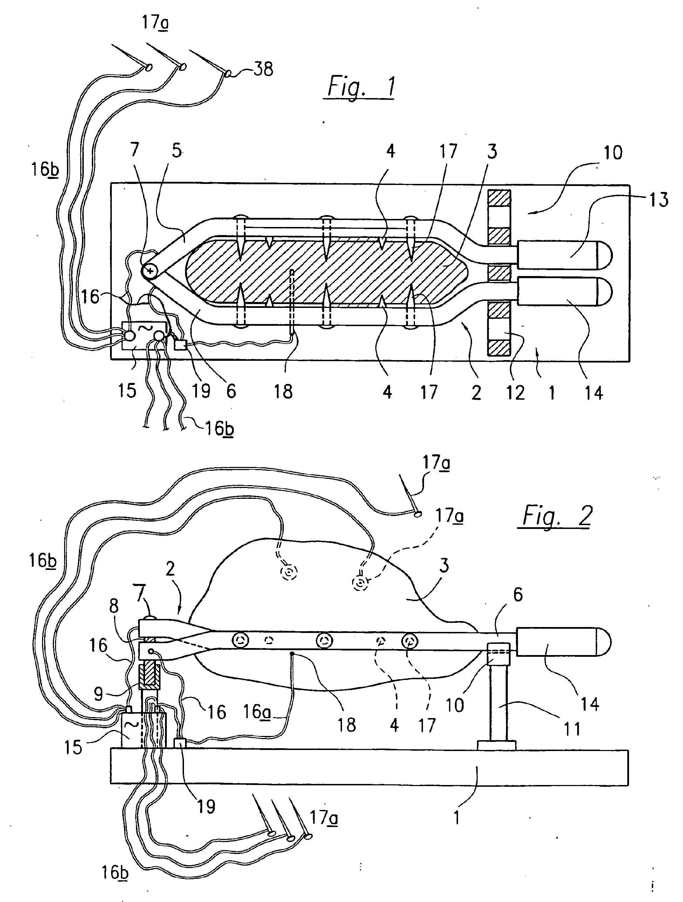

Figures 1 and 2 show by: 1 a marble base for the tool - 2 a vice for cooked ham, which vice clamps a cooked ham 3 by means of the four teeth 4 that, extending from the inner faces of the respective arms 5, 6, penetrate the side walls of the product and may also function as electrodes - 7 a pin which allows each arm 5, 6 to be rotated parallel with respect to the base 1 in order to set the product 3 into the vice, the pin being electrically insulated from the base 1 and holding the two arms 5, 6 electrically insulated one from the other by means of a plastic washer 8 and a plastic sleeve 9 whose profiles are not detailed in order to make the drawing simple - 10 an horizontal barr of insulating material fixed to the base 1 by a pillar 11 and bearing notches 12 wherein the ends of the arms 5, 6 are introduced so as to maintain them in the closed position in which the product is clamped, otherwise to maintain them in the waiting open position when a product is introduced a first time, otherwise again when the product has to be released in order to give it a different position into the vice as it is sliced - 13, 14 two handles in insulating material, each being positioned at a free end of arms 5, 6 , respectively, in order to make easy the handling of the arms - 15 a source of alternate electric current of 12 Volts, 200 Watt and 40 KHz frequency - 16 conductors connecting, through the arms 5, 6, the current source 15 with six stainless steel electrodes 17 in the form of small spits, three on each side, fixed to the inner faces of arms 5, 6 and penetrated into the body of the product 3 - 16b the flying conductors connecting the current source 15 with six electrodes 17a that an operator may apply, taking them by a knob 38 at their ends, in the product points more adapted to cause an uniform heating, three on one side and three on the other side of the product - 18 a temperature sensor introduced into the core of the ham to show the temperature sensed therein and connected by the conductor 16a with a OFF/ON control switch 19 for the interruption or passage of the current through one of the conductors 16, depending on the ham having reached the desired temperature or the temperaturte sensed by the sensor being lower than the one desired.

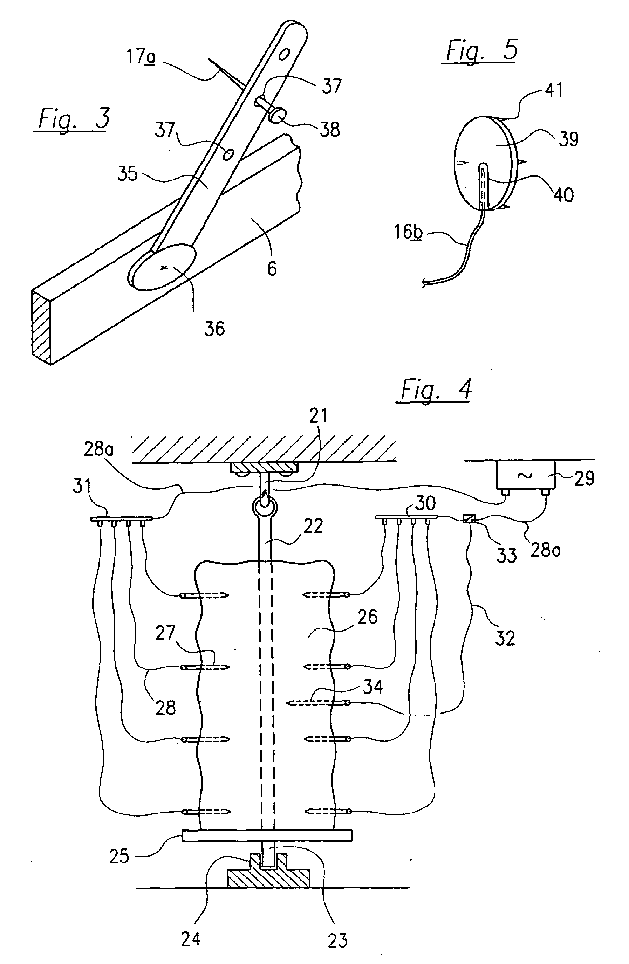

Fig. 3 shows part of an arm 6 in the vice 2 wherein a flat bar 35 is hinged on 36 in order to be rotated by an operator. The flat bar 35 has three holes 37 each being adapted to receive an electrode 17a connected with the current source 15 by a conductore 16b not shown in the figure. Each arm 5, 6 in the vice 2 may bear a number of flat bars 35 so that the electrodes may be applied into a ham in the quantity and position that the operator will deem as adapted to obtain the desired uniform heating of ham.

Fig. 4 shows by: 20 an upper support - 21 a hook fixed to support 20 - 22 a vertical spit engaged with the hook 21 and electrically insulated therefrom at its upper end, the spit 22 having the lower end held into the hole of a bush 24 made of insulating material - 25 a removable plate which bears a product 26 in the form of a roughly cylinder made of cooked ham slices stacked and compacted one on the other along the spit 22 - 27 electrodes made of titanium introduced into the body of product 26 and fed by the source of alternate current 29 of 12 Volts, 200 Watt and 25 KHz frequency - immovable bars 30, 31 that distribute electric current, respectively, to the right group of electrodes and to the left group of electrodes 27 through flying conductors 28, 28a - 34 a temperature sensor introduced into the core of product 26 and connected by the conductor 32 with a OFF/ON control switch 33 for the interruption or passage of the current through one of the conductors 28a, depending on the ham having reached the desired temperature or the temperaturte sensed by the sensor being lower than the one desired.

Fig. 5 shows an electrode 39 in the form of a stainless steel plate provided with means 41 like tips adapted to penetrate into the product surface in order to make sure the contact of the electrode and the transmission of the current, the electrode being provided with a radial pocket 40 wherein the end of a flying conductor 16b is received.

Considering the low powers needed for using the invented tool and method, it is realized that, for instance, once the characteristics of the product and of the electrodes used for its ohmic heating require current of 12 Volts and 25 KHz frequency, the current source may be a unit available on the market like those for feeding a halogen lamp comprising a 12 Volts feeder associated with a transformer adapet to work at 25 KHz frequency. For different requirements, one shall easily use an electric current generator of the desired characteristics, fed by electric batteries through suitable transformers or through a powered generator group, the generator being conveniently electrically insulated.

## Claims

1. Tool (2) for heating and keeping it warm a precooked meat product (3) by means of electric energy provided with means (1) for laying the tool on a work table, **characterized in that** it comprises means (5, 6, 2) in the form of a vice for holding the product (3) in the tool, the product being a cooked ham, a roast suckling-pig, a piece of roasted meat, the tool (2) comprising at least two electrodes (17) adapted to penetrate into two substantially opposite parts of the product (3) and an electric system (15, 16) having a source of alternate current (15) of such a power and tension that, once the source of alternate current (15) is connected with the electrodes, before or after application on the product, an electric potential difference is generated between said parts capable of causing the desired ohmic heating of the product, the current frequency being at least of 50 Hz, the tool (2) further comprising at least a temperature sensor (18) which shows the product inner temperature and a control switch (19) that an operator uses for controlling the current passage between the opposite electrodes (17), the parts under tension being crossed by a current weak enough to cause no damage or uneasiness to the operator.

2. Tool (2) according to claim 1 **characterized in that** the electric system (15, 16) has a power not higher than 300 Watt, a tension between 12 and 25 Volts and the frequency is higher than 15 KHz.

3. Tool (2) according to claim 1 **characterized in that** each electrode (17) is integral with an arm (5, 6) of the vice (2).

4. Tool (2) according to claim 1 **characterized in that** each arm (5, 6) of the vice (2) bears hinged at least one flat plate (35) provided with a plurality of holes (37) each hole being adapted to receive an electrode (17a) connected with the current source (15, 16) by means of a flying conductor (16b).

5. Tool (22, 25) for heating and keeping it warm a precooked meat product **characterized in that** it comprises an upper bearing element (20, 21) to which a spit (22) is vertically hung for impiling and compacting thereon portions or slices (26) of a cooked ham or other pre-cooked meats and comprises at least two electrodes (27) in the form of small spits adapted to penetrate into two substantially opposite parts of the product (26) and an electric system having a source of alternate current (29) of such a power and tension that, once the current is applied to the electrodes (27) set into the product (26), an electric potential difference is generated between said parts for causing the desired ohmic heating of the product, the frequency of the electric current being at least of 50 Hz, the tool (2) further comprising at least a temperature sensor (34) which shows the product inner temperature and a control switch (33) that an operator uses for controlling the current passage between the opposite electrodes (27), the parts under tension being crossed by a current weak enough to cause no damage or uneasiness to an operator.

6. Tool (22, 25) according to claim 5 **characterized in that** the electric system has a power not higher than 300 Watt, a tension between 12 and 25 Volts and the frequency is higher than 15 KHz.

7. Tool (22, 25) according to claims 5 and 6 **characterized in that** the spit (22) is electrically insulated from the upper bearing element (20, 21) and from a lower retaining element (24).

8. Tool (2, 22-25) according to claims 1 and 5 **characterized in that** the electrodes are in the form of plates each bearing one or more tips on one of its faces, the tips being able to penetrate the product enough for going beyond possible superficial fat parts.

9. Tool (2, 22-25) according to claims 1 and 5 **characterized in that** the electrodes are of a standard Cr-Ni stainless steel or titanium stainless steel or of vanadium or of a platinum coated metal or of carbonium or of graphite.

10. Tool (2, 22-25) according to claims 1 and 5 **characterized in that** the temperature sensor (18, 34) is associated with a control switch (19, 33) able to interrupt the current passage once the product inner temperature exceeds the desired value and to reinstate the current passage in order to take the product inner temperature at the desired value.

11. Tool (2, 22-25) according to claims 1 and 5 **characterized in that** each electrode (17a, 27) is connected with the current source (15, 29) by a flying electric conductor (16b, 28).

12. Method for heating and keeping it warm a precooked meat product by means of electric energy **characterized in that** it comprises the steps of holding the product (3, 26) fast in a tool (2, 22-25); introducing at least one temperature sensor (18, 34) into the product core; applying at least two electrodes (17, 27) in the form of small spits each in a product part substantially opposite to the other part; applying to the opposite electrodes an alternate current of power and tension adapted to reach and maintain the desired temperature in the product, the current frequency being at least of 50 Hz, checking by the temperature sensor (18, 34) that the product inner temperature is the one desired, cutting the product in slices a first time, cutting the product in slices further times until the change of the position of the product in the tool or the position of the electrodes in the product is necessary in order to proceed in the cutting.

13. Method according to claim 12 **characterized in that** it comprises a first step of injecting a pickle into the product body with the double scope of improving the product taste and the current passage through the product.

14. Method according to claim 12 **characterized in that** the current applied to the electrodes (17, 17a, 27) has a power not higher than 300 Watt, the tension is between 12 and 25 Volts and the frequency is higher than 15 KHz.

15. Method according to claims 12-14 **characterized in that** the product inner temperature is controlled by a switch (19, 33) associated with a a temperature sensor (18, 34) for interrupting the current passage when the desired temperature is exceeded and reinstating the current passage when necessary for taking the product again at the desired temperature.

16. Method according to claims 12-15 **characterized in that** the desired product inner temperature is between 60°C and 80°C

## Patentansprüche

1. Werkzeug (2) zum Erhitzen und Warmhalten eines vorgekochten Fleischproduktes (3) mittels elektrischer Energie, das mit Mitteln (1) zum Legen des Werkzeuges auf einen Werktisch versehen ist, **dadurch gekennzeichnet, dass** es Mittel (5, 6, 2) in Form eines Schraubstockes zum Halten des Produktes (3) in dem Werkzeug aufweist, wobei das Produkt ein Kochschinken, ein gebratenes Ferkel, ein Stück eines gebratenen Fleisches ist, wobei das Werkzeug (2) wenigstens zwei Elektroden (17) aufweist, die so ausgebildet sind, dass sie in zwei im wesentlichen einander gegenüberliegende Teile des Produktes (3) eindringen können und ein elektrisches System (15, 16) mit einer Wechselstromquelle (15) mit einer solchen Leistung und Spannung, dass, wenn die Wechselstromquelle (15) mit den Elektroden erst einmal verbunden ist, bevor oder nachdem das Produkt angebracht worden ist, zwischen den Teilen eine elektrische Potentialdifferenz erzeugt wird, die in der Lage ist, eine gewünschte Ohmsche Erwärmung des Produktes zu verursachen, die Stromfrequenz wenigstens 50 Hz beträgt, das Werkzeug (2) weiterhin wenigstens einen Temperatursensor (18) aufweist, der die Produktinnentemperatur zeigt und einen Steuerschalter (19), den eine Bedienungsperson zum Steuern des Stromdurchgangs zwischen den einander gegenüberliegenden Elektroden (17) verwendet, wobei die unter Spannung stehenden Teile von einem Strom durchflossen werden, der schwach genug ist, um der Bedienungsperson keine Verletzung oder Unbehagen zu verursachen.

2. Werkzeug (2) nach Anspruch 1, **dadurch gekennzeichnet, dass** das elektrische System (15, 16) eine Leistung nicht höher als 300 Watt, eine Spannung zwischen 12 und 25 Volt und eine Frequenz höher als 15 KHz aufweist.

3. Werkzeug (2) nach Anspruch 1, **dadurch gekennzeichnet, dass** jede Elektrode (17) mit einem Arm (5, 6) des Schraubstockes (2) einstückig ausgebildet ist.

4. Werkzeug (2) nach Anspruch 1, **dadurch gekennzeichnet, dass** jeder Arm (5, 6) des Schraubstockes (2) wenigstens eine flache Platte (35) angelenkt trägt, die mit einer Anzahl von Löchern (37) versehen ist, wobei jedes Loch so ausgebildet ist, dass es eine Elektrode (17a) aufnehmen kann, die mittels einer freien Zuleitung (16b) verbunden werden kann.

5. Werkzeug (22, 25) zum Erhitzen und Warmhalten eines vorgekochten Fleischproduktes, **dadurch gekennzeichnet, dass** es ein oberes Lagerelement (20, 21) aufweist, an welchem ein Spieß (22) vertikal aufgehängt ist, um auf diesem Teile oder Scheiben (26) gekochten Schinkens oder anderen vorgekochten Fleisches zum Stapeln und zum Verdichten wenigstens zwei Elektroden (27) in Form von kleinen Spießen aufweist, die in zwei im wesentlichen einander gegenüberliegende Teile des Produktes (26) eindringen können, und mit einem elektrischen System, das eine Wechselstromquelle (29) mit einer solchen Leistung und einer solchen Spannung aufweist, dass wenn erst einmal Strom an die Elektroden (27), die in das Produkt (26) eingesetzt sind, ein Strom angelegt ist, zwischen diesen Teilen eine elektrische Potentialdifferenz erzeugt wird, die eine gewünschte Ohmsche Erwärmung des Produktes verursacht, wobei die Frequenz des elektrischen Stromes wenigstens 50 Hz beträgt, das Werkzeug (2) weiterhin aufweist wenigstens einen Temperatursensor (34), der die Innentemperatur des Produktes zeigt und einen Steuerschalter (33), den die Bedienungsperson zum Steuern des Stromdurchgangs zwischen den einander gegenüberliegenden Elektroden (27) verwendet, wobei die unter Spannung stehenden Teile durch einen Strom durchflossen werden, der schwach genug ist, um der Bedienungsperson keine Verletzung oder Unbehagen zu verursachen.

6. Werkzeug (22, 25) nach Anspruch 5, **dadurch gekennzeichnet, dass** das elektrische System eine Leistung nicht höher als 300 Watt, eine Spannung zwischen 12 und 25 Volt und eine Frequenz nicht höher als 15 KHz hat.

7. Werkzeug (22, 25) nach Anspruch 5 und 6, **dadurch gekennzeichnet, dass** der Spieß (22) gegenüber dem oberen Lagerelement (20, 21) und dem unteren Halteelement (24) elektrisch isoliert ist.

8. Werkzeug (2, 22-25) nach Anspruch 1 und 5, **dadurch gekennzeichnet, dass** die Elektroden die Form von Platten aufweisen, die jeweils ein oder mehrere Spitzen an einer ihrer Seiten tragen, wobei die Spitzen in das Produkt weit genug eindringen können, um über mögliche, oberflächliche Fettteile hinauszugehen.

9. Werkzeug (2, 22-25) nach Anspruch 1 und 5, **dadurch gekennzeichnet, dass** die Elektroden aus einem rostfreien Standard-Cr-Ni-Stahl oder aus einem rostfreien Titan-Stahl oder auch Vanadium- oder Platinbeschichtetem Metall oder Kohlenstoff oder Graphit, bestehen.

10. Werkzeug (2, 22-25) nach Anspruch 1 und 5, **dadurch gekennzeichnet, dass** dem Temperatursensor (18, 34) ein Steuerschalter (19, 33) zugeordnet ist, der den Stromdurchgang unterbrechen kann, wenn die Produktinnentemperatur einmal den gewünschten Wert übersteigt und den Stromdurchgang wieder einsetzt, damit die Produktinnentemperatur den gewünschten Wert einnimmt.

11. Werkzeug (2, 22-25) nach Anspruch 1 und 5, **dadurch gekennzeichnet, dass** jede Elektrode (17a, 27) mit der Stromquelle (15, 29) durch einen freien elektrischen Leiter (16b, 28) verbunden ist.

12. Verfahren zum Erhitzen und Warmhalten eines vorgekochten Fleischproduktes mittels elektrischer Energie, **dadurch gekennzeichnet, dass** es die Schritte aufweist Festhalten des Produktes (3, 26) in einem Werkzeug (2, 22-25); Einführen von wenigstens einem Temperatursensor (18, 34) in den Produktkern; Anbringen von wenigstens zwei Elektroden (17, 27) in Form eines kleinen Spießes jeweils in einen Produktteil, im wesentlichen in einen Produktteil gegenüberliegend zu dem anderen Teil; Anlegen eines Wechselstroms an die einander gegenüberliegenden Elektroden mit einer Leistung und einer Spannung, die geeignet ist, dass die gewünschte Temperatur in dem Produkt erreicht und aufrechterhalten wird, wobei die Stromfrequenz wenigstens 50 Hz ist, Überprüfen mittels des Temperatursensors (18, 34), dass die Produktinnentemperatur die gewünschte Temperatur ist, erstmaliges Schneiden des Produktes in Scheiben, weitere Male Schneiden des Produktes in Scheiben bis die Änderung der Position des Produktes in dem Werkzeug oder die Position der Elektroden in dem Produkt notwendig ist, um mit dem Schneiden fortzuschreiten.

13. Verfahren nach Anspruch 12, **dadurch gekennzeichnet, dass** es einen ersten Schritt Einsetzen einer Salzlake in den Produktkörper mit der doppelten Aufgabe den Produktgeschmack zu verbessern und den Stromdurchgang durch das Produkt zu verbessern.

14. Verfahren nach Anspruch 12, **dadurch gekennzeichnet, dass** der an die Elektroden (17, 17a, 27) angelegte Strom eine Leistung nicht höher als 300 Watt, eine Spannung zwischen 12 und 25 Volt und eine Frequenz nicht höher als 15 KHz aufweist.

15. Verfahren nach Anspruch 12 bis 14, **dadurch gekennzeichnet, dass** die Produktinnentemperatur durch einen Schalter (19, 33) gesteuert wird, der einem Temperatursensor (18, 34) zugeordnet ist, um den Stromdurchgang zu unterbrechen, wenn die gewünschte Temperatur überschritten ist und den Stromdurchgang wieder einzusetzen, wenn dies dafür notwendig ist, dass das Produkt wiederum die gewünschte Temperatur einnimmt.

16. Verfahren nach Anspruch 12 bis 15, **dadurch gekennzeichnet, dass** die gewünschte Produktinnentemperatur zwischen 60°C und 80°C liegt.

## Revendications

1. Outil (2) pour chauffer et conserver au chaud un produit précuit à base de viande (3) au moyen d'énergie électrique muni d'un moyen (1) pour poser l'outil sur une table de travail, **caractérisé en ce qu'**il comprend un moyen (5, 6, 2) sous la forme d'un étau pour tenir le produit (3) dans l'outil, le produit étant un jambon cuit, un cochon de lait rôti, un morceau de viande rôtie, l'outil (2) comprenant au moins deux électrodes (17) aptes à pénétrer dans deux parties sensiblement opposées du produit (3) et un système électrique (15, 16) ayant une source de courant alternatif (15) avec une puissance et une tension telles que, une fois que la source de courant alternatif (15) est connectée aux électrodes, avant ou après l'application sur le produit, il est généré une différence de potentiel électrique entre lesdites parties capable de provoquer le chauffage ohmique souhaité du produit, la fréquence de courant étant au moins de 50 Hz, l'outil (2) comprenant en outre au moins un capteur de température (18) qui indique la température intérieure du produit et un commutateur de régulation (19) qu'un opérateur utilise pour réguler le passage de courant entre les électrodes opposées (17), les parties sous tension étant croisées par un courant suffisamment faible pour ne provoquer aucun trouble ou aucune gêne à l'opérateur.

2. Outil (2) selon la revendication 1, **caractérisé en ce que** le système électrique (15, 16) a une puissance qui ne dépasse pas 300 W, une tension entre 12 V et 25 V et une fréquence supérieure à 15 kHz.

3. Outil (2) selon la revendication 1, **caractérisé en ce que** chaque électrode (17) fait partie intégrale d'un bras (5, 6) de l'étau (2).

4. Outil (2) selon la revendication 1, **caractérisé en ce que** chaque bras (5, 6) de l'étau (2) porte en charnière au moins une plaque plate (35) munie d'une pluralité de trous (37), chaque trou étant apte à recevoir une électrode (17a) connectée à la source de courant (15, 16) au moyen d'un conducteur volant (16b).

5. Outil (22, 25) pour chauffer et conserver au chaud un produit précuit à base de viande, **caractérisé en ce qu'**il comprend un élément porteur supérieur (20, 21) duquel une broche (22) est pendue verticalement pour empaler et compacter sur celle-ci des portions ou des tranches (26) d'un jambon cuit ou d'autres viandes précuites et comprend au moins deux électrodes (27) sous la forme de petites broches aptes à pénétrer dans deux parties sensiblement opposées du produit (26) et un système électrique ayant une source de courant alternatif (29) avec une puissance et une tension telles que, une fois que le courant est appliqué aux électrodes (27) placées dans le produit (26), il est généré une différence de potentiel électrique entre lesdites parties pour provoquer le chauffage ohmique souhaité du produit, la fréquence du courant électrique étant au moins de 50 Hz, l'outil (2) comprenant en outre au moins un capteur de température (34) qui indique la température intérieure du produit et un commutateur de régulation (33) qu'un opérateur utilise pour réguler le passage de courant entre les électrodes opposées (27), les parties sous tension étant croisées par un courant suffisamment faible pour ne provoquer aucun trouble ou aucune gêne à un opérateur.

6. Outil (22, 25) selon la revendication 5, **caractérisé en ce que** le système électrique a une puissance qui ne dépasse pas 300 W, une tension entre 12 V et 25 V et une fréquence supérieure à 15 kHz.

7. Outil (22, 25) selon les revendications 5 et 6, **caractérisé en ce que** la broche (22) est électriquement isolée de l'élément porteur supérieur (20, 21) et d'un élément de rétention inférieur (24).

8. Outil (2, 22-25) selon les revendications 1 et 5, **caractérisé en ce que** les électrodes sont sous la forme de plaques portant chacune un ou plusieurs embouts sur l'une de ses faces, les embouts étant capables de pénétrer le produit suffisamment pour aller au-delà des éventuelles parties superficielles de gras.

9. Outil (2, 22-25) selon les revendications 1 et 5, **caractérisé en ce que** les électrodes sont en acier inoxydable Cr-Ni standard ou en acier inoxydable de titane ou en vanadium ou en métal enduit de platine ou en carbone ou en graphite.

10. Outil (2, 22-25) selon les revendications 1 et 5, **caractérisé en ce que** le capteur de température (18, 34) est associé à un commutateur de régulation (19, 33) apte à interrompre le passage de courant une fois que la température intérieure du produit dépasse la valeur souhaitée et rétablir le passage de courant pour mettre la température intérieure du produit à la valeur souhaitée.

11. Outil (2, 22-25) selon les revendications 1 et 5, **caractérisé en ce que** chaque électrode (17a, 27) est connectée à la source de courant (15, 29) par un conducteur électrique volant (16b, 28).

12. Procédé pour chauffer et conserver au chaud un produit précuit à base de viande au moyen d'énergie électrique, **caractérisé en ce qu'**il comprend les étapes consistant à maintenir le produit (3, 26) immobile dans un outil (2, 22-25), introduire au moins un capteur de température (18, 34) au coeur du produit ; appliquer au moins deux électrodes (17, 27) sous la forme de petites broches chacune dans une partie du produit sensiblement opposée à l'autre partie ; appliquer aux électrodes opposées un courant alternatif de puissance et de tension aptes à atteindre et maintenir la température souhaitée dans le produit, la fréquence de courant étant au moins de 50 Hz ; contrôler par le capteur de température (18, 34) que la température intérieure du produit est celle souhaitée ; découper le produit en tranches une première fois ; et découper le produit en tranches d'autres fois jusqu'à ce que le changement de la position du produit dans l'outil ou de la position des électrodes dans le produit soit nécessaire pour poursuivre le découpage.

13. Procédé selon la revendication 12, **caractérisé en ce qu'**il comprend une première étape consistant à injecter une saumure dans le corps du produit dans le but d'améliorer à la fois le goût du produit et le passage du courant à travers le produit.

14. Procédé selon la revendication 12, **caractérisé en ce que** le courant appliqué aux électrodes (17, 17a, 27) a une puissance qui ne dépasse pas 300 W, une tension entre 12 V et 25 V et une fréquence supérieure à 15 kHz.

15. Procédé selon les revendications 12 à 14, **caractérisé en ce que** la température intérieure du produit est régulée par un commutateur (19, 33) associé à un capteur de température (18, 34) pour interrompre le passage du courant lorsque la température souhaitée est dépassée et rétablir le passage du courant lorsque cela est nécessaire pour remettre le produit à la température souhaitée.

16. Procédé selon les revendications 12 à 15, **caractérisé en ce que** la température intérieure du produit souhaitée est entre 60°C et 80°C.
